# EUROPEAN PATENT APPLICATION

(11) **EP 1 978 039 A1**
(43) Date of publication of application: **08.10.2008**
(21) Application number: 06835004.0
(22) Date of filing: 20.12.2006
(51) Int. Cl.: C08F 4/6592, C08F 10/00

(54) **METHOD FOR PRODUCING POLYOLEFIN AND CATALYST COMPONENT USED FOR PRODUCTION OF POLYOLEFIN**

(30) Priority: 06.01.2006 JP 2006001325
(71) Applicant: Idemitsu Kosan Co., Ltd., Chiyoda-ku Tokyo 100-8321 (JP)
(72) Inventor: TSUDA, Takehiro, Chiba 299-0107 (JP); KANAMARU, Masami, Chiba 299-0107 (JP); MINAMI, Yutaka, Chiba 299-0107 (JP)
(74) Representative: Vossius & Partner
(86) International application number: PCT/JP2006/325334
(87) International publication number: WO 2007/077734

(57) **Abstract**

Provided is a method of commercially advantageously producing a high-quality polyolefin with high yield in a homogeneous system in the presence of a catalyst containing a transition metal compound as a main catalyst component. A method of producing a polyolefin includes polymerizing one or more substances selected from ethylene and α-olefins having 3 to 30 carbon atoms in a saturated hydrocarbon solvent in the presence of a catalyst containing a catalyst component (A) composed of a transition metal compound of Group IV of the periodic table, and a catalyst component (B) composed of an organic aluminoxane, in which the component (B) is obtained by subjecting an organic aluminoxane, which is soluble in a saturated hydrocarbon solvent, to a contact treatment with an organic aluminum compound having an alkyl group with 1 to 10 carbon atoms in advance in the saturated hydrocarbon solvent.

## Description

### Technical Field

The present invention relates to a method of producing a polyolefin using a catalyst containing a transition metal compound as a main catalyst component, and to a catalyst component used for production of the polyolefin.

### Background Art

Recently, a technique of producing an α-olefin polymer by using a highly active homogeneous catalyst combining an aluminoxane and a transition metal compound has been developed and has attracted attention (see Patent Document 1, for example). However, in such a technique, a catalytic activity per aluminum atom is low, and use of an aluminoxane in a large amount is needed. Thus, the technique has many problems industrially such as an inevitably high production cost and a large amount of aluminum remained in the polymer.
Therefore, various proposals have been made for solving such problems (see Patent Documents 2 and 3, for example). In such techniques, an activity per aluminum atom has improved to some extent, but such an aluminoxane has poor solubility and involves difficulties in handling. Further, removal of aluminum remained in the polymer involves difficulties so as to cause deterioration of polymer quality, color deterioration, and the like and further improvements were desired.
For the purpose of improving catalytic activity, there is proposed a method of using methyl aluminoxane with other organic aluminum compounds and the like (see Patent Documents 4 and 5, for example). In such techniques, a use amount of methyl aluminoxane is slightly decreased, but the activity per unit amount of aluminum is still insufficient. Thus, further improvements are desired.
The aluminoxane used in the conventional techniques described above is soluble in an aromatic hydrocarbon solvent, but improvement in activity of an aluminoxane soluble in a saturated hydrocarbon solvent is also desired.

Patent Document 1: JP 64-51408 A
Patent Document 2: JP 11-246615 A
Patent Document 3 JP 11-001510 A
Patent Document 4: JP 60-260602 A
Patent Document 5: JP 2-167310 A

### Disclosure of the Invention

### Problem to be solved by the Invention

The present invention has been made in view of the circumstances described above, and an object of the present invention is therefore to provide a method of producing a high-quality polyolefin industrially advantageously with high yield in a homogeneous system in the presence of a catalyst containing a transition metal compound as a main catalyst component.

### Means for solving the Problems

The inventors of the present invention have conducted intensive studies, and have found that in production of a polyolefin in a homogeneous system in the presence of a catalyst containing a transition metal compound, catalytic activity improves dramatically by using a cocatalyst component obtained by subjecting an organic aluminoxane soluble in a saturated hydrocarbon solvent to contact treatment in advance with specific organic aluminum in the saturated hydrocarbon solvent, and thereby the above object can be achieved. The present invention has been completed based on the above knowledge.
That is, the present invention provides the method of producing a polyolefin and the catalyst component described below.
1. A method of producing a polyolefin, including polymerizing one or more substances selected from ethylene and an α-olefin having 3 to 30 carbon atoms in a saturated hydrocarbon solvent in the presence of a catalyst containing a catalyst component (A) composed of a transition metal compound of Group IV of the periodic table and a catalyst component (B) composed of an organic aluminoxane, characterized in that the component (B) is obtained by subjecting an organic aluminoxane soluble in a saturated hydrocarbon solvent to contact treatment in advance with an organic aluminum compound having an alkyl group with 1 to 10 carbon atoms in the saturated hydrocarbon solvent.
2. A method of producing a polyolefin according to claim 1, characterized in that the transition metal compound of Group IV of the periodic table in the catalyst component (A) is a dibridged complex.
3. A method of producing a polyolefin according to claim 1 or 2, characterized in that the catalyst further contains a catalyst component (C) composed of organic aluminum.
4. A catalyst component used for the method of producing a polyolefin according to claim 1 or 2, including an organic aluminoxane solution obtained by subj ecting an organic aluminoxane soluble in a saturated hydrocarbon solvent to contact treatment with organic aluminum having an alkyl group with 1 to 10 carbon atoms in the saturated hydrocarbon solvent.

### Effects of the Invention

According to the present invention, a catalyst containing a main catalyst component composed of a transition metal compound and a highly active cocatalyst component composed of an organic aluminoxane solution subjected to specific treatment is used, to thereby allow industrially advantageous production of a high-quality polyolefin with high yield.

### Best Mode for carrying out the Invention

A catalyst to be used for a method of producing a polyolefin of the present invention contains a catalyst component (A) composed of a transition metal compound of Group IV of the periodic table and a catalyst component (B) composed of an organic aluminoxane. As the transition metal compound of the component (A), a compound having a crosslinked ligand and showing olefin polymerization activity is preferred, and examples thereof include a metallocene complex and a non-metallocene complex.
Specific examples of the transition metal compound of the component (A) include dimethylsilyl(tetramethyl cyclopentadienyl)(3-tert-butyl-5-methyl-2-phenoxy)zirconium dichloride, dimethylsilyl(tetramethyl cyclopentadienyl)(tert-butylamide)zirconium dichloride, dimethylsilylene-bis(2-methyl-4,5-benzoindenyl)zirconium dichloride, dimethylsilylene-bis(2-methyl-4-phenylindenyl)zirconium dichloride, dimethylsilylene-bis(2-methyl-4-napthylindenyl)zirconium dichloride, dimethylsilylene-bis(2-methylindenyl)zirconium dichloride, ethylen-bis(2-methylindenyl)zirconium dichloride, (1,2'-dimethylsilylene)(2,1'-dimethylsilylene)-bis(3-trimethyl silylmethyl-indenyl)zirconium dichloride, (1,2'-dimethylsilylene)(2,1'-dimethylsilylene)(3-trimethylsily lmethyl-indenyl)(indenyl)zirconium dichloride, (1,2'-dimethylsilylene)(2,1'-dimethylsilylene)-bis(indenyl)zir conium dichloride, (1,2'-dimethylsilylene)(2,1'-dimethylsilylene)-bis(3-n-butyl-i ndenyl)zirconium dichloride, (1,2'-dimethylsilylene)(2,1'-dimethylsilylene)-bis(n-butyl-ind enyl)(indenyl)zirconium dichloride, (1,2'-dimethylsilylene)(2,1'-dimethylsilylene)-bis(indenyl)zir conium dichloride, dichloro[1,1'-dimentylsilylenebis[2-ethyl-4-(2-fluoro-4-biphen yl)-4H-azulenyl]dichloride, dichloro[dimethylsilylene(cyclopentadienyl)(2,4-dimethyl-4H-1-azulenyl] dichloride, and compounds corresponding to these compounds in which zirconium can be modified into zinc, and further, where compounds corresponding to these compounds in which dichloride can be modified into dimethyl or dibenzyl.
Further, other examples thereof include N,N'-bis(2,6-diisopropylphenyl)-1,2-dimethylethylene diiminonickel dibromide, N,N'-bis(2,6-diisopropylphenyl)-1,2-dimethylethylene diiminoparadium dibromide, and the like.
In the present invention, of the transition metal compounds, a dibridged complex as in a metallocene complex is preferred. The dibridged complex is a compound represented by the following general formula (I).

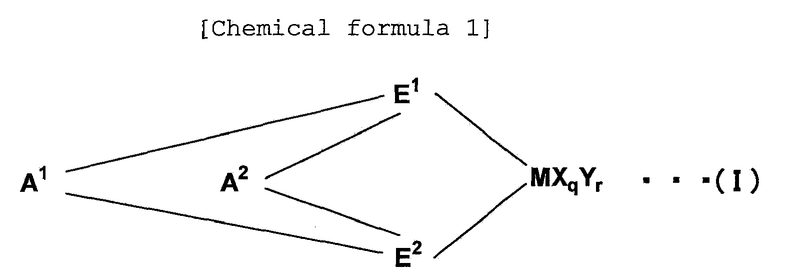

In the above general formula (I) : M represents a group IV metal element of the periodic table; and E¹ and E² each represent a ligand selected from a substituted cyclopentadienyl group, an indenyl group, a substituted indenyl group, a heterocyclopentadienyl group, a substituted heterocyclopentadienyl group, an amido group, a phosphine group, a hydrocarbon group, and a silicon-containing group and have a crosslinked structure formed with A¹ and A². E¹ and E² may be identical to or different from each other. X represents a σ-bonding ligand. In the case where a plurality of Xs exist, the plurality of Xs may be identical to or different from each other and may be crosslinked with another X, E¹, E², or Y. Y represents a Lewis base. In the case where a plurality of Ys exist, the plurality of Ys may be identical to or different from each other and may be crosslinked with another Y, E¹, E², or X. A¹ and A² are each a bivalent crosslinking group bonding two ligands and each represent a hydrocarbon group having 1 to 20 carbon atoms, a halogen-containing hydrocarbon group having 1 to 20 carbon atoms, a silicon-containing group, a germanium-containing group, a tin-containing group, -O-, -CO-, -S-, -SO₂-, -Se-, -NR¹-, -PR¹-, -P(O)R¹-, -BR¹-, or -AlR¹- (where R¹ represents a hydrogen atom, a halogen atom, a hydrocarbon group having 1 to 20 carbon atoms, or a halogen-containing hydrocarbon group having 1 to 20 carbon atoms). A¹ and A² may be identical to or different from each other. q represents an integer of 1 to 5 and represents [(valence of M)-2]. r represents an integer of 0 to 3.

The catalyst component (B) composed of an organic aluminoxane is obtained by subjecting an organic aluminoxane soluble in a saturated hydrocarbon solvent to contact treatment in advance with an organic aluminum compound having an alkyl group with 1 to 10 carbon atoms in the saturated hydrocarbon solution. The organic aluminoxane soluble in a saturated hydrocarbon solvent refers to an organic aluminoxane capable of dissolving in a saturated hydrocarbon solvent such as n-hexane or isohexane at room temperature without gelling and having a residual product in an amount of 1 g/100 mL or less obtained after passing through a glass filter with a pore number of P250 in an inert atmosphere.
Examples of the organic aluminoxane soluble in a saturated hydrocarbon solvent include:
a straight chain aluminoxane represented by the following general formula (II)

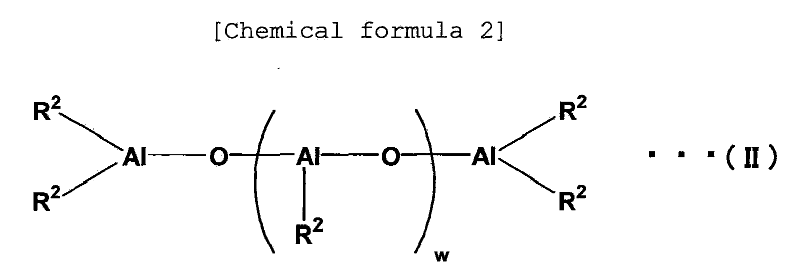

(in the formula: R² represents a hydrocarbon group having 1 to 20 carbon atoms and preferably 1 to 12 carbon atoms such as an alkyl group, an alkenyl group, an aryl group, or an arylalkyl group, or a halogen atom; w represents an average polymerization degree and is an integer of generally 2 to 50 and preferably 2 to 40; and R²s may be identical to or different from each other);
and a cyclic aluminoxane represented by the following general formula (III)

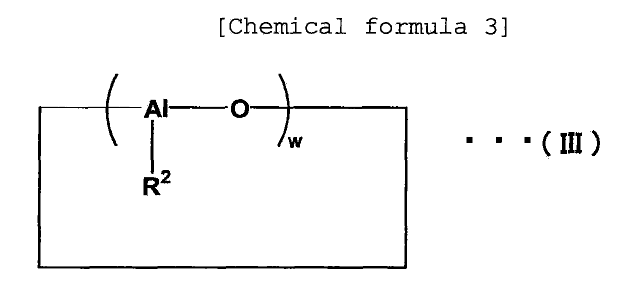

(in the formula, R² and w are the same as those in the above general formula (II)). One type of aluminoxane may be used, or two or more types thereof may be used in combination. In the above general formulae (II) and (III), R² is preferably a combination of a methyl group and an isobutyl group.
For contact treatment of the organic aluminoxane, an organic aluminum compound having an alkyl group with 1 to 10 carbon atoms and preferably 1 to 5 carbon atoms is used. The alkyl group having 10 or less carbon atoms provides sufficient activity. An example of organic aluminum is trialkyl aluminum such as trimethyl aluminum, triethyl aluminum, triisobutyl aluminum, or trioctyl aluminum. Other examples thereof include: trialkyl aluminum having different alkyl groups; and aluminum chloride such as diethyl aluminum chloride or diisobutyl aluminum chloride. In the present invention, triisobutyl aluminum is particularly preferred. One type of the organic aluminum compounds may be used, or two or more types thereof may be used in combination.

The contact treatment of the organic aluminoxane soluble in a saturated hydrocarbon solvent (hereinafter, may be simply referred to as "organic aluminoxane") and an organic aluminum compound can be conducted by introducing the organic aluminum compound into the organic aluminoxane dissolved in the saturated hydrocarbon solvent; and stirring the whole. A contact treatment temperature is generally about -20°C to 100°C, preferably -10 to 50°C, and more preferably 0 to 30°C. A contact treatment temperature of -20°C or higher provides an activity improving effect, and a contact treatment temperature of 100°C or lower causes no reduction in catalytic activity.
A use ratio of the organic aluminoxane to the organic aluminum compound is preferably 1:0.1 to 1:10 and more preferably 1:0.1 to 1:2 in molar ratio. A use ratio of 1:0.1 to 1:10 provides sufficient activity, and a use amount of the organic aluminum compound will not be excessive. A treatment time is generally about 0.1 minute to 144 hours, preferably 0.1 minute to 72 hours, and more preferably 0.1 minute to 24 hours. A treatment time of 0.1 minute ormore provides a sufficient activity improving effect, and a treatment time of 144 hours or less causes no reduction in catalytic activity.
Examples of the saturated hydrocarbon solvent to be used for the contact treatment include: a saturated aliphatic hydrocarbon solvent such as n-hexane, isohexane, heptane, or octane; and a saturated cyclic hydrocarbon solvent such as cyclohexane or cyclopentane.

The catalyst used in the present invention may contain an organic aluminum compound as a catalyst component (C) in addition to the catalyst component (A) and the catalyst component (B) described above. The organic aluminum compound may employ the same compounds as those described for the component (B).
In the catalyst used in the present invention, a use ratio of the catalyst component (A) to the catalyst component (B) is within a range of preferably 10:1 to 1:100 and more preferably 2:1 to 1:10 in molar ratio. A use ratio thereof within the above ranges provides a not excessively high catalyst cost per unit mass of a polymer and is practical.
A use ratio of the catalyst component (A) to the catalyst component (C) is within a range of preferably 1:1 to 1:10,000, more preferably 1:5 to 1:2,000, and furthermore preferably 1:10 to 1:1,000. The catalyst component (C) is used, to thereby improve polymerization activity per transition metal. A use amount of the organic aluminum compound within the above ranges prevents waste of the organic aluminum compound and not a large amount thereof will remain in the polymer.

In the method of producing a polyolefin of the present invention, one or more substances selected from ethylene and an α-olefin having 3 to 30 carbon atoms are polymerized in the presence of the catalysts described above. Examples of the α-olefin having 3 to 30 carbon atoms include propylene, 1-butene, 1-pentene, 4-methyl-1-pentene, 1-hexene, 1-octene, 1-decene, 1-dodecene, 1-tetradecene, 1-hexadecene, 1-octadecene, and 1-icocene.
In the present invention, a polymerization method preferably employs solution polymerization or suspension polymerization. A polymerization temperature is generally about -100 to 250°C, preferably -50 to 200°C, and more preferably 0 to 130°C. Further, a polymerization time is generally about 5 minutes to 15 hours. A reaction pressure is preferably normal pressure to 20 MPa (gauge) and more preferably normal pressure to 10 MPa (gauge).

Examples of a method of controlling a molecular weight of the polyolefin include: selection of the type and use amount of each catalyst component, and polymerization temperature; and polymerization in the presence of hydrogen.
The present invention also provides a catalyst component composed of an organic aluminoxane solution obtained by subjecting an organic aluminoxane soluble in a saturated hydrocarbon solvent to contact treatment with organic aluminum having an alkyl group with 1 to 10 carbon atoms in the saturated hydrocarbon solution to be used for the method of producing a polyolefin described above. The catalyst component is the catalyst component (B).

### Examples

Next, the present invention will be described more specifically by way of Examples, but the present invention is not limited to Examples in any way.

### Production Example 1 (Preparation of catalyst component)

As described below, (1,2'-dimethylsilylene)(2,1'-dimethylsilylene)(3-trimethylsily lmethylindenyl)indenyl zirconium dichloride was produced.
In a stream of nitrogen, 50 mL of ether and 3.5 g (10.2 mmol) of (1,2'-dimethylsilylene)(2,1'-dimethylsilylene)bisindene were loaded into a Schlenk flask having a volume of 200 mL. The whole was cooled to -78°C, and 12.8 mL of a hexane solution (1.60 mol/L) of n-butyl lithium (n-BuLi) was dropped thereto. Then, the resultant was stirred at room temperature for 8 hours. The solvent was distilled off, and an obtained so lid was dried under reduced pressure, to thereby obtain 5.0 g of a white solid.
The solid was dissolved in 50 mL of tetrahydrofuran (THF), and 1.4 mL of iodomethyl trimethylsilane was dropped thereto at room temperature. Next, hydrolysis was conducted with 10 mL of water, and an organic phase was extracted with 50 mL of ether. Then, the organic phase was dried, and the solvent was distilled off. 50 mL of ether was added thereto, and the whole was cooled to -78°C. 12. 4 mL of a hexane solution (1. 60 mol/L) of n-BuLi was dropped thereto, and the resultant was stirred at room temperature for 3 hours. The ether was distilled off. An obtained solid was washed with 30 mL of hexane and dried under reduced pressure. 5.11 g of the white solid was suspended in 50 mL of toluene, and 2.0 g of zirconium tetrachloride (8.60 mmol) suspended in 10 mL of toluene in another Schlenk flask was added thereto. The whole was stirred at room temperature for 12 hours, and the solvent was distilled off. The residue was washed with 50 mL of hexane and recrystallized with 30 mL of dichloromethane, to thereby obtain 1.2 g of yellow microcrystals (yield of 25%).
The results of ¹H-NMR (90 MHz, CDCl₃) measurement of the product are described below.
δ: 0.09 (s, trimethylsilyl, 9H), 0.89, 0.86, 1.03, 1.06 (s, dimethylsilylene, 12H), 2.20, 2.65 (d, methylene, 2H), 6.99 (s, CH, 1H), 7.0-7.8 (m, Ar-H, 8H)

### Production Example 2 (Preparation of organic aluminoxane solution)

In a separable flask equipped with a stirring device and having a volume of 500 mL, 20 mL of triisobutyl aluminum (TIBAL) and 85 mL of n-hexane were introduced. 2.5 mL of water was added to this solution at -5°C. 17.5 mL of trimethyl aluminum (TMAL) was added to this reaction solution, and the resultant was subjected to heat aging at 50°C for 1 hour. Then, 3 mL of water was added to this solution at the same temperature. A precipitated gel component was removed through filtration with a glass filter, to thereby obtain a n-hexane solution of a modified methyl aluminoxane which is an organic aluminoxane uniformly dissolved in n-hexane (hereinafter, referred to as "organic aluminoxane solution").

### Production Example 3 (Preparation of catalyst component)

As described below, (1,2'-dimethylsilylene)(2,1'-dimethylsilylene)-bis(3-trimethyl silylmethylindenyl)zirconium dichloride was produced.
In a Schlenk flask, 3.0 g (6.97 mmol) of a lithium salt of (1,2'-dimethylsilylene)(2,1'-dimethylsilylene)-bis(indene) was dissolved in 50 mL of THF (tetrahydrofuran), and the whole was cooled to -78°C. 2.1 mL (14.2 mmol) of iodomethyl trimethylsilane was dropped slowly thereto, and the whole was stirred at room temperature for 12 hours.
The solvent was distilled off. 50 mL of ether was added, and the resultant was washed with a saturated ammonium chloride solution. After liquid separation, an organic phase was dried, and the solvent was removed, to thereby obtain 3.04 g (5.88 mmol) of (1,2'-dimethylsilylene)(2,1'-dimethylsilylene)-bis(3-trimethyl silylmethylindene) (yield of 84%).
Next, in a stream of nitrogen, 3.04 g (5.88 mmol) of (1,2'-dimethylsilylene)(2,1'-dimethylsilylene)-bis(3-trimethyl silylmethylindene) obtained above and 50 mL of ether were introduced into a Schlenk flask. The whole was cooled to -78°C. 7.6 mL (1.7 mmol) of a hexane solution (1. 54 mol/L) of n-BuLi was dropped thereto. The resultant was stirred at room temperature for 12 hours, and the ether was distilled off. An obtained solid was washed with 40 mL of hexane, to thereby obtain 3.06 g (5.07 mmol) of a lithium salt as an ether adduct (yield of 73%).
The results of ¹H-NMR (90MHz, THF-d₈) measurement of the product are described below.
δ: 0.04 (s, 18H, trimethylsilyl); 0.48 (s, 12H, dimethylsilylene); 1.10 (t, 6H, methyl); 2.59 (s, 4H, methylene); 3.38 (q, 4H, methylene); 6.2-7.7 (m, 8H, Ar-H)

In a stream of nitrogen, the obtained lithium salt was dissolved in 50 mL of toluene. The whole was cooled to -78°C, and a toluene (20 mL) suspension of 1.2 g (5.1 mmol) of zirconium tetrachloride cooled to -78 °C in advance was dropped thereto. After dropping, the whole was stirred at room temperature for 6 hours. The solvent of the reaction solution was distilled off. The obtained residue was recrystallized with dichloromethane, to thereby obtain 0.9 g (1.33 mmol) of (1,2'-dimethylsilylene)(2,1'-dimethylsilylene)-bis(3-trimethyl silylmethylindenyl)zirconium dichloride (yield of 26%).
The results of ¹H-NMR (90 MHz, CDCl₃) measurement of the product are described below.
δ: 0.0 (s, 18H, trimethylsilyl); 1.02, 1.12 (s, 12H, dimethylsilylene); 2.51 (dd,4H, methylene); 7.1-7.6 (m, 8H, Ar-H)

### [Example 1]

### (1) Contact treatment of organic aluminoxane and organic aluminum

Into a Schlenk flask having a volume of 50 mL, 13 mL of the organic aluminoxane solution (2.4 mol/L) obtained in Production Example 2 was loaded at room temperature in a stream of nitrogen. Then, 5 mL of a heptane solution (2 mol/L) of triisobutyl aluminum was added under stirring, and the whole was stirred for 10 minutes, to thereby obtain an organic aluminoxane solution subjected to contact treatment.

### (2) Polymerization

Into an autoclave subjected to heat drying and having a volume of 1 L, 400 mL of heptane and 0.3 mmol of triisobutyl aluminum were loaded, and 0.4 MPa of hydrogen and propylene were introduced thereto to a total pressure of 0.8 MPa. A temperature of the resultant was adjusted to 60°C under stirring. Then, 1.6 µmol of the catalyst component obtained in Production Example 1 and 1. 6 mmol of the organic aluminoxane solution subjected to contact treatment and obtained in the above section (1) were added, and the whole was polymerized for 2 hours. After completion of the polymerization reaction, a reaction product was dried under reduced pressure, to thereby obtain 113 g of polypropylene. The obtained polypropylene had an intrinsic viscosity [η] of 0.40 dl/g and a mesopentad fraction [mmmm] of 40.3 mol%.

The intrinsic viscosity [η] and the mesopentad fraction [mmmm] were measured as described below. The same applies to other examples described below.

### (1) Intrinsic viscosity [η]

The intrinsic viscosity was measured at 135°C in a tetralin solvent by using an automatic visometer VMR-053 manufactured by Rigo Co., Ltd.

### (2) Mesopentad fraction [mmmm]

A meso fraction of a polypropylene molecular chain in a pentad unit was determined by measuring a signal of a methyl group in a ¹³C nuclear magnetic resonance spectrum in accordance with a method proposed in "Macromolecules, 6, 925(1973)" by A. Zambelli et al. The measurement of the ¹³C nuclear magnetic resonance spectrum was conducted following peak assignments proposed in "Macromolecules, 8, 687 (1975) "by A. Zambelli et al. and using the device and conditions described below.

Device: ¹³C-NMR device JNM-EX400 manufactured by JEOL Ltd.
Method: Proton complete decoupling method
Concentration: 220 mg/mL
Solvent: 90:10 (volume ratio) mixed solvent of 1,2,4-trichlorobenzene and benzene-d
Temperature: 130°C
Pulse width: 45°
Pulse repeating time: 4 seconds
Integration: 1,000 times

### [Comparative Example 1]

43 g of polypropylene was obtained by polymerizing in the same manner as in Example 1(2) except that 1.6 mmol of the organic aluminoxane solution obtained in Production Example 2 was added instead of the organic aluminoxane solution subjected to contact treatment in Example 1(2). The obtained polypropylene had an intrinsic viscosity [η] of 0.40 dl/g and a mesopentad fraction [mmmm] of 40.5 mol%.

### [Example 2]

Into an autoclave subjected to heat drying and having a volume of 1 L, 400 mL of heptane and 0.3 mmol of triisobutyl aluminum were loaded, and 0.01 MPa of hydrogen and propylene were introduced thereto to a total pressure of 0.8 MPa. A temperature of the resultant was adjusted to 60°C under stirring. Then, 0.4 µmol of the catalyst component obtained in Production Example 3 and 0. 4 mmol of the organic aluminoxane solution subjected to contact treatment and obtained in Example 1(1) were added, and the whole was polymerized for 4 hours. After completion of the polymerization reaction, a reaction product was dried under reduced pressure, to thereby obtain 65.9 g of polypropylene. The obtained polypropylene had an intrinsic viscosity [η] of 0.48 dl/g and a mesopentad fraction [mmmm] of 56.8 mol%.

### [Comparative Example 2]

29.8 g of polypropylene was obtained by polymerizing in the same manner as in Example 2 except that 0.4 mmol of the organic aluminoxane solution obtained in Production Example 2 was added instead of the organic aluminoxane solution subjected to contact treatment in Example 2. The obtained polypropylene had an intrinsic viscosity [η] of 0.48 dl/g and a mesopentad fraction [mmmm] of 55.6 mol%.

### Industrial Application

A catalyst component composed of an organic aluminoxane solution subjected to contact treatment of the present invention is used, to thereby allow industrially advantageous production of a polyolefin with high yield.

## Claims

1. A method of producing a polyolefin, comprising polymerizing one or more substances selected from ethylene and an α-olefin having 3 to 30 carbon atoms in a saturated hydrocarbon solvent in the presence of a catalyst containing a catalyst component (A) composed of a transition metal compound of Group IV of the periodic table and a catalyst component (B) composed of an organic aluminoxane, wherein the catalyst component (B) is obtained by subjecting an organic aluminoxane soluble in a saturated hydrocarbon solvent to contact treatment in advance with an organic aluminum compound having an alkyl group with 1 to 10 carbon atoms in the saturated hydrocarbon solvent.

2. A method of producing a polyolefin according to claim 1, wherein the transition metal compound of Group IV of the periodic table in the catalyst component (A) is a dibridged complex.

3. A method of producing a polyolefin according to claim 1 or 2, wherein the catalyst further contains a catalyst component (C) composed of organic aluminum.

4. A catalyst component used for the method of producing a polyolefin according to claim 1 or 2, comprising an organic aluminoxane solution obtained by subjecting an organic aluminoxane soluble in a saturated hydrocarbon solvent to contact treatment with organic aluminum having an alkyl group with 1 to 10 carbon atoms in the saturated hydrocarbon solvent.
